# EUROPÄISCHE PATENTSCHRIFT

(11) **EP 3 717 182 B1**
(45) Veröffentlichungstag und Bekanntmachung des Hinweises auf die Patenterteilung: **09.08.2023**
(21) Anmeldenummer: 18807861.2
(22) Anmeldetag: 08.11.2018
(51) Int. Cl.: B25J 9/16, H02G 1/12, H02B 3/00

(54) **VERFAHREN FÜR DIE ELEKTRISCHE VERKABELUNG MIT EINEM KABELSEQUENZ VON ELEKTRONISCHER KOMPONENTEN IM SCHALTANLAGENBAU UND EINE ENTSPRECHENDE ROBOTANORDNUNG.**
METHOD FOR ELECTRICAL CABLING WITH A CABLE SEQUENCE OF ELECTRONIC COMPONENTS IN SWITCHGEAR CONSTRUCTION AND A CORRESPONDING ROBOT ARRANGEMENT
PROCÉDÉ POUR LE CÂBLAGE ÉLECTRIQUE PAR UNE SÉQUENCE DE CÂBLES DE COMPOSANTS ÉLECTRONIQUES DANS LA CONSTRUCTION D'INSTALLATIONS DE COMMUTATION ET DISPOSITIF ROBOTIQUE CORRESPONDANT

(30) Priorität: 29.11.2017 DE 102017128295
(43) Veröffentlichungstag der Anmeldung: 07.10.2020
(73) Patentinhaber: Rittal GmbH & Co. KG, 35745 Herborn (DE)
(72) Erfinder: BÄCHLER, Andreas Michael, 35708 Haiger (DE)
(74) Vertreter: Angerhausen, Christoph
(86) Internationale Anmeldenummer: PCT/DE2018/100906
(87) Internationale Veröffentlichungsnummer: WO 2019/105502

(56) Entgegenhaltungen:
- EP-A2- 0 924 818
- WO-A1-2017/005282
- WO-A1-2017/038479
- DE-A1- 19 918 377
- DE-U1- 29 721 028
- M. BUSI ET AL: "The WIRES Experiment: Tools and Strategies for Robotized Switchgear Cabling", PROCEDIA MANUFACTURING, Bd. 11, 1. Januar 2017 (2017-01-01), Seiten 355-363, XP55539776, ISSN: 2351-9789, DOI: 10.1016/j.promfg.2017.07.118
- System Robot Automazione: "Syndy, The independent solution", , 31. März 2012 (2012-03-31), Seiten 1-16, XP55539797, Visano, Italy Gefunden im Internet: URL:http://www.systemrobot.it/en/crlines/w iring-syndy [gefunden am 2019-01-09]

## Beschreibung

Die Erfindung geht aus von einem Verfahren für die elektrische Verkabelung elektronischer Komponenten im Schaltanlagenbau sowie einer entsprechenden Anordnung wie sie aus der EP 0 924 818 A2 und aus der EP 0 917 259 B1 bekannt sind. Ein ähnliches Verfahren ist auch aus der DE 44 312 54 A1 bekannt.

Im Schaltanlagenbau besteht grundsätzlich ein großer Bedarf danach, die Verdrahtung der elektronischen Komponenten, die beispielsweise auf einer Montageplatte für einen Schaltschrank vormontiert sind, zu automatisieren. Demgegenüber steht jedoch die mitunter hohe Komplexität derartiger Schaltanlagen. Nicht nur ist die Kabelführung zwischen den einzelnen Komponenten mitunter hoch komplex, vielmehr bedarf es auch einer Vielzahl unterschiedlicher Kabel (Länge, Querschnitt, Farbe,

Aderendbehandlung, etc.), die innerhalb einer Schaltanlage zu verbauen sind. Des Weiteren sind die zu verdrahtenden elektronischen Komponenten hochgradig unterschiedlich ausgebildet, insbesondere was ihre Art und Position der Kontaktierung und die Zuführrichtung des Kabelendes an einen Anschluss der jeweiligen Komponente betrifft.

Um auf die hohe Komplexität hinsichtlich der Vielzahl unterschiedlicher Kabel zu reagieren, ist aus der DE 10 2015 103 444 A1 eine Kabelsequenz für die Verdrahtung einer elektrischen Schaltanlage bekannt, bei der in einer vorgeschriebenen Abfolge vorkonfektionierte Kabel, einschließlich Aderendbehandlung, miteinander verkettet sind. Für die Verkabelung der elektronischen Komponenten der Schaltanlage müssen die Einzelkabel lediglich noch aus der Kabelsequenz herausgetrennt werden, womit bereits ein in sämtlichen Kabeleigenschaften (etwa Länge, Querschnitt, Farbe und Aderendbehandlung) erzeugtes Kabel erhalten wird, das unmittelbar für die Verkabelung elektronischer Komponenten in der Schaltanlage verarbeitet werden kann.

Die Verwendung derartiger Kabelsequenzen hat jedoch den Nachteil, dass diese nicht mehr mit den gängigen Verdrahtungsautomaten, wie sie beispielsweise aus der EP 0 917 259 B1 bekannt sind, verwendbar sind.

Es ist daher die Aufgabe der Erfindung, ein Verfahren für die elektrische Verkabelung elektronischer Komponenten im Schaltanlagenbau sowie eine entsprechende Anordnung vorzuschlagen, welche die vollautomatisierte Verkabelung der elektronischen Komponenten erlauben.

Diese Aufgabe wird durch ein Verfahren mit den Merkmalen des Anspruchs 1 gelöst.

Der nebengeordnete Anspruch 11 beschreibt eine entsprechende Anordnung. Vorteilhafte Ausführungsformen der Erfindung sind jeweils Gegenstand der abhängigen Ansprüche.

Das Verfahren kann weiterhin das Verlegen eines Kabels der Kabelsequenz in einem Kabelkanal, das Kontaktieren eines Kabels der Kabelsequenz an einer Leiteranschlussklemme und/oder das mechanische und/oder elektrische Prüfen einer hergestellten Kontaktierung aufweisen. Die vorgeschlagene Lösung eignet sich somit insbesondere für die automatisierte Verdrahtung von bereits mit elektronischen Komponenten bestückten Montageplatten. Die Ansteuerung des mindestens einen Roboters kann entsprechend automatisch auf Basis eines Schaltplans erfolgen, welcher die vorzunehmende elektrische Verkabelung der elektronischen Komponenten sowie die Anordnung der Komponenten auf der Montageplatte wiedergibt.

Die Kabelsequenz kann beispielsweise entsprechend der Lehre der DE 10 2015 103 444 A1 als eine Rolle über ihre Enden miteinander verbundener Einzelkabel bereitgestellt.

Da die Montage der Komponenten auf der Montageplatte nicht vollständig toleranzfrei erfolgen kann, kann es erforderlich sein, dass die Ansteuerung des Roboters unter Berücksichtigung festgestellter Toleranzen und Abweichungen der Anordnung der Komponenten auf der Montageplatte korrigiert wird. So kann das Verfahren das Identifizieren und das Lokalisieren der elektronischen Komponenten auf dem gemeinsamen Werkstück, insbesondere der Montageplatte, aufweisen. Für das Identifizieren kann der multifunktionale Endeffektor beispielsweise eine optische Einheit aufweisen, über die entweder eine eindeutige Kennung der elektronischen Komponenten erfasst, oder über welche mittels Bildverarbeitung die Geometrie und/oder die Lage einer jeweiligen Komponente auf dem Werkstück erfasst wird. Das Identifizieren und Lokalisieren der elektronischen Komponenten ist grundsätzlich nicht auf derartige Verfahren beschränkt.

Der Schaltplan kann eine Ausgangspositionsinformation mindestens einer der Komponenten in Bezug auf das Werkstück aufweisen, wobei das Verfahren weiterhin das Korrigieren der Ausgangspositionsinformation aufweist, wenn bei dem Identifizieren und Lokalisieren eine Abweichung zwischen der Ausgangspositionsinformation und einer ermittelten Positionsinformation mindestens einer der Komponenten erfasst worden ist.

Eine Lage und/oder eine Ausrichtung des elektrischen Anschlusses einer der elektronischen Komponenten kann ermittelt werden, wobei weiterhin Störkonturen im Umfeld des elektrischen Anschlusses erfasst werden können, falls vorhanden, und wobei unter Berücksichtigung der Lage und der Ausrichtung des elektrischen Anschlusses sowie eventuell erfasster Störkonturen sowie gegebenenfalls unter weiterer Berücksichtigung von Bewegungsfreiheitsgraden des Roboters eine Zuführrichtung des Kabelendes zu dem Anschluss ermittelt wird. Der Roboter kann daraufhin das Kabelende entlang der ermittelten Zuführrichtung in den Anschluss einstecken, um es an dem Anschluss zu kontaktieren.

Die Kabelsequenz wird einer Trenneinrichtung des multifunktionalen Endeffektors zugeführt, mit der das in der Kabelsequenz endstellige Kabel mit dem Kabelende aus der Kabelsequenz herausgetrennt oder herausgelöst wird. Der Roboter beziehungsweise der multifunktionale Endeffektor weist ein Transportmittel für die Kabelsequenz auf. Das Heraustrennen kann beispielsweise das Herausschneiden entsprechend der Lehre der DE 10 2015 103 444 A1 oder das Herauslösen im Sinne des Lösens einer Steck- oder Klebeverbindung aufweisen.

Die Kabelsequenz kann eine Kabelkette sein, bei der die vorkonfektionierten Einzelkabel über ihre Kabelenden, die gegebenenfalls eine Aderendbehandlung aufweisen, miteinander zu einer Kette verbunden sind. Die Kabelsequenz kann eine Reihenanordnung einer Vielzahl vorkonfektionierter Kabel aufweisen, die jeweils ein erstes und ein zweites Kabelende aufweisen. Jedes der vorkonfektionierten Kabel kann einen Leiter und eine Leiterisolierung aufweisen, wobei die Kabelenden für die Verdrahtung einer elektrischen Schaltung bearbeitet sind, insbesondere derart, dass ein jeweiliges Leiterende am ersten Kabelende und am zweiten Kabelende isolationsfrei ist. Die Kabelsequenz kann weiterhin Verbindungen zwischen in der Reihenanordnung benachbart zueinander angeordneten vorkonfektionierten Kabeln aufweisen. Mittels der Verbindungen können jeweils ein zuvor als loses Kabelende hergestelltes erstes Kabelende eines vorkonfektionierten Kabels und ein zuvor als loses Kabelende hergestelltes zweites Kabelende eines in der Reihenanordnung folgenden vorkonfektionierten Kabels miteinander verbunden sein.

Das Heraustrennen eines Kabels aus der Kabelsequenz kann das Heraustrennen eines Verbindungsbereiches aufweisen, über den ein erstes Kabelende mit einem zweiten Kabelende eines in der Kabelsequenz folgenden oder vorangehenden Kabels verbunden ist. In dem Verbindungsbereich können die beiden in der Kabelsequenz aufeinanderfolgenden Kabel überlappend oder auch auf Stoß form-, kraft-, und/oder stoffschlüssig miteinander verbunden, insbesondere miteinander verschweißt, verspleißt, vercrimpt oder ultraschallkompaktiert sein.

Das Heraustrennen kann mit Hilfe eines Schneidwerkzeugs durchgeführt werden, das zwei um eine Länge des Verbindungsbereichs voneinander beabstandete Messer oder Klingen, insbesondere zwei gegenüberstehende, gegenläufige V-Messer mit jeweils zwei um die Länge des Verbindungsbereichs voneinander beabstandete Teilmesser oder Klingen aufweist. Der Verbindungsbereich kann miteinander verbundene Drahtbürsten oder Kabellitze aufweisen. Beispielsweise können die über den Verbindungsbereich miteinander verbundenen Kabelenden mit Aderendhülsen für die elektrische Kontaktierung konditioniert sein und jeweils einen Drahtbürstenüberstand aus Kabellitzen aufweisen, der aus der Aderendhülse des jeweiligen Kabelendes herausragt, wobei die Kabelenden in dem Bereich des Drahtbürstenüberstands miteinander verbunden sind und so den Verbindungsbereich bilden.

Das Verfahren kann weiterhin mindestens einen der nachfolgen Schritte a. bis d. aufweisen, wonach
a. der multifunktionale Endeffektor das Kabelende loslässt, nachdem das Kabelende an dem elektrischen Anschluss einer der elektronischen Komponenten kontaktiert worden ist,
b. dass das Kabelende aufweisende Kabel durch eine Kabelverbindungsstellendetektionseinrichtung des multifunktionalen Endeffektors hindurch geleitet wird,
c. nach dem Erkennen einer Kabelverbindungstelle, an der das Kabel mit dem Kabelende mit einem in der Sequenz folgenden Kabel über eine Verbindungsstelle verbunden ist, die Kabelverbindungsstelle aus der Kabelsequenz herausgetrennt wird; und
d. mit dem multifunktionalen Endeffektor das dem Kabelende gegenüberliegende Kabelende gegriffen und einem weiteren elektrischen Anschluss der elektronischen Komponenten zugeführt wird.

Ein in der Kabelsequenz endstelliges Kabel, das das Kabelende aufweist, kann aus der Kabelsequenz herausgelöst oder herausgetrennt werden, nachdem das Kabelende an dem elektrischen Anschluss einer der elektronischen Komponenten kontaktiert worden ist. Dabei kann der mindestens eine Roboter nach dem Kontaktieren des Kabelendes mit seinem multifunktionalen Endeffektor einen Verlegeweg des das Kabelende aufweisenden Kabels abfahren, wobei das Kabel mit seiner Vorschubgeschwindigkeit durch den Endeffektor transportiert wird, die einer Vorschubgeschwindigkeit des Endeffektors entlang des Verlegeweg entspricht. Der multifunktionale Endeffektor kann beispielsweise eine Hülse mit Detektions-, Trenn- und Förderfunktion für die Zuführung und Heraustrennung einzelner Drähte aus der Kabelsequenz aufweisen.

Nach dem Zuführen des Kabelendes in einen elektrischen Anschluss kann das Kabelende an dem elektrischen Anschluss kontaktiert werden, wozu
a. entweder mit dem multifunktionalen Endeffektor das Kabelende in eine Leiteranschlussklemme mit Direktstecktechnik des elektrischen Anschlusses eingesteckt wird; oder
b. mit dem multifunktionalen Endeffektor eine Federzugklemme des elektrischen Anschlusses entgegen ihrer Vorspannung geöffnet, daraufhin das Kabelende in die Federzugklemme eingesteckt und anschließend die vorgespannte Federzugklemme von dem multifunktionalen Endeffektor wieder losgelassen wird, oder
c. mit dem multifunktionalen Endeffektor eine Schraube einer Schraubklemme des elektrischen Anschlusses angelöst, daraufhin das Kabelende in die Schraubklemme eingesteckt und anschließend die Schraube der Schraubklemme mit dem multifunktionalen Endeffektor angezogen wird.

Wenn das Werkstück eine Montageplatte für den Schaltanlagenbau ist, kann diese beispielsweise auf einem mobilen Werkstückträger oder einer Rollenbahn zwischen verschiedenen Bearbeitungsstationen einer Fertigungslinie transportiert werden, wobei noch vor einer Anordnung der Mehrzahl elektronischer Komponenten auf der Montageplatte die Montageplatte zunächst auf dem Werkstückträger befestigt und erst dann wieder von dem Werkstückträger gelöst wird, wenn die Montageplatte mechanisch bearbeitet worden ist, die elektrischen Komponenten auf der Montageplatte befestigt worden sind, und sämtliche Verdrahtungen gemäß dem Schaltplan hergestellt worden sind, wozu die Montageplatte von dem mobilen Werkstückträger zwischen mindestens einer ersten Bearbeitungsstation für die mechanische Bearbeitung, einer zweiten Bearbeitungsstation für die Montage der elektrischen Komponenten auf der Montageplatte und einer dritten Bearbeitungsstation für die elektrische Verkabelung der elektronischen Komponenten transportiert worden ist.

Die Montageplatte wird üblicherweise in einer vertikalen Ausrichtung im Inneren eines Schaltschranks montiert oder als einzelne Montageplatte bereitgestellt und kann in dieser Position von dem mobilen Werkstückträger empfangen und an diesem montiert werden. Die Montageplatte kann dabei anschließend mit dem mobilen Werkstückträger aus dem Schaltschrankinneren entfernt und den einzelnen Bearbeitungsstationen zugeleitet werden, wozu die Montageplatte für die Bearbeitung an wenigstens einer der Bearbeitungsstationen aus der vertikalen Ausrichtung in eine horizontale Ausrichtung oder in eine gegenüber der vertikalen angewinkelte Ausrichtung geschwenkt wird. Es kann vorgesehen sein, dass die Montageplatte nach einer Endmontage und gegebenenfalls nach einer weitergehenden technischen Überprüfung wieder in die Vertikalausrichtung gebracht und in dieser mit dem mobilen Werkstückträger in das Schaltschrankinnere eingesetzt und dort mit dem Schaltschrankrahmengestell verbunden wird. Es wird somit in Form des mobilen Werkstückträgers ein einziges Transportmittel bereitgestellt, mit Hilfe welches das Handling der Montageplatte von der Demontage der Montageplatte aus dem Schaltschrank bis zur Wiedermontage der Montageplatte im Schaltschrankinneren zu und zwischen den einzelnen Bearbeitungsstationen transportiert wird, die für die Erstellung einer Schaltanlage auf der Montageplatte erforderlich sind.

Die Montageplatte kann mit dem mobilen Werkstückträger in der vertikalen Ausrichtung über eine offene Seitenwand des Schaltschranks parallel zur Türseite und parallel zur Rückseite des Schaltschranks aus dem Schaltschrank herausbewegt werden. Es ist somit insbesondere nicht mehr erforderlich, dass die Montageplatte über die Vorderseite des Schaltschranks aus dem Schaltschrank herausgenommen wird, wozu es in der Regel zunächst erforderlich ist, die Montageplatte aus einer hinteren Montageposition im Inneren des Schaltschranks innerhalb des Schaltschranks nach vorne, das heißt in Richtung der Schaltschranktür zu bewegen, um sie dort mit einem Werkstückträger in Empfang zu nehmen.

Es kann weiterhin vorgesehen sein, dass nachdem das Kabelende an dem elektrischen Anschluss einer der elektronischen Komponenten kontaktiert und festgelegt worden ist, mit dem multifunktionalen Endeffektor eine Funktions- und Qualitätskontrolle durchgeführt wird, indem der multifunktionale Endeffektor einen elektrischen Übergangswiderstand zwischen dem kontaktierten Kabel und dem elektrischen Anschluss ermittelt, oder das Kabelende mit einer bestimmten Kraft entgegen einer Einsteckrichtung des Kabelendes in eine Federzugklemme oder eine Schraubklemme des Anschlusses beaufschlagt.

Eine Anordnung zur Durchführung des zuvor beschriebenen Verfahrens weist mindestens einen Roboter, beispielsweise mindestens einen Knickarmroboter, mit einem multifunktionalen Endeffektor auf, wobei der Roboter ein Transportsystem aufweist, über das dem multifunktionalen Endeffektor eine Kabelsequenz aus mehreren miteinander verbundenen Kabeln zugeführt ist. Der multifunktionale Endeffektor weist einen Greifer zum Greifen eines Kabelendes der Kabelsequenz und eine Detektionseinrichtung zur Detektion des Verbindungsbereichs und eine Trenneinrichtung zum Heraustrennen eines Verbindungsbereichs zwischen aufeinanderfolgenden Kabeln der Kabelsequenz und/oder zum Herauslösen eines endstelligen Kabels aus der Kabelsequenz auf.

Die Anordnung kann einen ersten und einen zweiten Roboter mit jeweils einem multifunktionalen Endeffektor aufweisen, wobei die multifunktionalen Endeffektoren der beiden Roboter unterschiedliche oder dieselben Funktionalitäten aufweisen können. Der erste Roboter kann dazu eingerichtet sein, ein erstes der beiden Kabelenden eines Kabels aus der Kabelsequenz einem elektrischen Anschluss einer ersten der elektronischen Komponenten zuzuführen. Der zweite Roboter kann dazu eingerichtet sein, ein zweites der beiden Kabelenden des Kabels einem elektrischen Anschluss einer zweiten der elektronischen Komponenten zuzuführen.

Dabei können die beiden Roboter dazu eingerichtet sein, dem jeweils das erste oder das zweite Kabelende einem elektrischen Anschluss einer der elektronischen Komponenten zuführenden anderen Roboter das das Kabelende aufweisende Kabel nachzuführen und gegebenenfalls in einem Kabelkanal auf dem Werkstück, insbesondere einer Montageplatte, zu verlegen.

Die Anordnung kann weiterhin einen Werkstückträger aufweisen, der dazu eingerichtet ist, ein Werkstück, insbesondere eine Montageplatte, festzuhalten, das Werkstück mindestens einer Bearbeitungsstation, insbesondere dem Roboter, zuzuführen und in Bezug auf die Bearbeitungsstation auszurichten.

Die Anordnung kann einen ersten und einen zweiten Roboter mit jeweils einem multifunktionalen Endeffektor aufweisen, wobei ein erster der Roboter ein erstes Ende eines biegeschlaffen Kabels und ein zweiter der Roboter ein zweites Ende des biegeschlaffen Kabels hält, und wobei die Roboter dazu eingerichtet sind, das biegeschlaffe Kabel auf einer mechanischen Spannung zu halten, so dass das Kabel zwischen den Enden im Wesentlichen gerade ist. Auf diese Weise kann vermieden werden, dass sich das Kabel trotz seiner Biegeschlaffheit während der Verdrahtung verheddert.

Der multifunktionale Endeffektor weist einen Sensor auf, der dazu eingerichtet ist, eine Position einer zu verkabelnden elektrischen Komponente auf dem Werkstück und/oder eine Position und/oder eine Ausrichtung eines Anschlusses der elektrischen Komponente zu erfassen.

Die Anordnung weist weiterhin eine Datenverarbeitungsanlage auf, in der ein Schaltplan einer auf dem Werkstück zu erzeugenden elektrischen Schaltanlage hinterlegt ist, wobei die Datenverarbeitungsanlage dazu eingerichtet ist, in dem Schaltplan hinterlegte Verdrahtungsinformationen der auf dem Werkstück angeordneten Komponenten um eine mit dem Sensor erfasste Positionsinformation und/oder Ausrichtungsinformation zu ergänzen, oder, wenn der Schaltplan bereits Ausgangsinformationen über die Position und/oder die Ausrichtung aufweist, diese Ausgangsinformation entsprechend der erfassten Positionsinformation und/oder der Ausrichtungsinformation zu aktualisieren.

Für die Ansteuerung des Roboters können als eine erste Eingabe ECAD-Daten zugrunde gelegt sein, die eine Planung der mit der Anordnung zur erzeugenden Schaltanlage beinhalten, insbesondere einen Schaltplan der zu erzeugenden Verdrahtungen der auf dem Werkstück angeordneten elektronischen Komponenten, wobei für die Ansteuerung des Roboters als eine zweite Eingabe die mit dem Sensor erfasste Positionsinformation und/oder Ausrichtungsinformation sein kann. Eine Datenverarbeitungsanlage der Anordnung kann dazu eingerichtet sein, aus der ersten und der zweiten Eingabe die Ansteuerung des Roboters zu erzeugen.

Die für die Verdrahtung erforderliche Information, insbesondere ein Schaltplan, kann direkt aus einem ECAD-System bereitgestellt werden. Dabei kann in einem ersten Schritt nach dem Engineering der Schaltanlage das zu verdrahtende Projekt mit einer Prüfroutine auf seine Automatisierungstauglichkeit überprüft werden. In einem zweiten Schritt kann das gegebenenfalls optimierte Projekt auf die Datenverarbeitungsanlage für die Ansteuerung des Roboters importiert und daraus ein Roboterprogramm für die Ansteuerung des Roboters automatisch generiert werden. In einem dritten Schritt kann die Montageplatte mit allen darauf befindlichen Komponenten zwecks Identifizierung und Lokalisierung der elektronischen Komponenten abgescannt werden. Anschließend können die ermittelten Ist-Daten der elektronischen Komponenten mit den in den ECAD-Daten erfassten Informationen abgeglichen und diese aktualisiert werden.

Das Identifizieren und Lokalisieren kann das Einlesen eines Produktidentifizierungscodes, eines RFID-Chips oder dergleichen aufweisen.

Der multifunktionale Endeffektor des Roboters kann einen Scanner für die Lokalisierung und Identifizierung der elektronischen Bauteile beziehungsweise der Verdrahtungsposition auf der Montageplatte umfassen. Der multifunktionale Endeffektor kann weiterhin eine Hülse mit Detektions-, Trenn- und Förderfunktion für die Zuführung und Heraustrennung der einzelnen Kabel sowie einen Greifer mit integrierter Sensorik für die Handhabung der abgetrennten einzelnen Kabel und gegebenenfalls ein Werkzeug für die Öffnung von Federzugklemmen sowie einen Schrauber für das Öffnen und Schließen von Schraubklemmen aufweisen.

Die Verwendung des Roboters einschließlich des sich daran befindlichen multifunktionalen Endeffektors ermöglicht die Kontaktierung der Kabel in unterschiedlichen Richtungen, insbesondere in vertikaler Richtung (senkrecht zur Montageplatte), in horizontaler Richtung (parallel zur Montageplatte), aber auch in angewinkelter Stellung (1-89° in Bezug auf die Ebene der Montageplatte).

Während beziehungsweise unmittelbar nach der Kontaktierung der einzelnen Kabelenden kann eine Funktions- und Qualitätskontrolle durchgeführt werden, die die Überwachung einer definierten Abzugskraft bei Anschlussklemmen sowie eines definierten Drehmoments bei Schraubklemmen umfasst.

Die Anordnung kann weiterhin dazu eingerichtet sein, in eine Wertschöpfungskette zur Erzeugung von Schaltanlagen integriert zu sein und dazu kann die oben beschriebene Anordnung eine odere mehrere Schnittstellen aufweisen, beispielsweise eine Schnittstelle zu einem ECAD-System, zu einem (automatischen) Bestückungsprozess, mit dem die elektronischen Komponenten auf dem Werkstück angeordnet werden, einen Schnittstelle zu einer Anlage für die (vollautomatische) Kabelkonfektionierung, so dass nicht automatisierbare Verbindungen hauptzeitparallel produziert werden können, eine Schnittstelle zu einem manuellen Verdrahtungsprozess, beispielsweise mittels "Smart Wiring" unter Anwendung von Systemen der Augmented Reality für die Vor- und/oder Nachverdrahtung von nicht automatisierbaren Drahtverbindungen, und/oder eine Schnittstelle zu einem (automatischen) Prüfprozess des fertig verdrahteten Schaltschranks.

Weitere Einzelheiten der Erfindung werden anhand der nachstehenden Figuren erläutert. Dabei zeigt:
- Figur 1: schematisch eine Ausführungsform eines Verfahrens für die elektrische Verkabelung elektronischer Komponenten im Schaltanlagenbau;
- Figur 2: eine Anordnung zur Durchführung eines erfindungsgemäßen Verfahrens; und
- Figur 3: eine weitere Anordnung zur Durchführung eines erfindungsgemäßen Verfahrens.

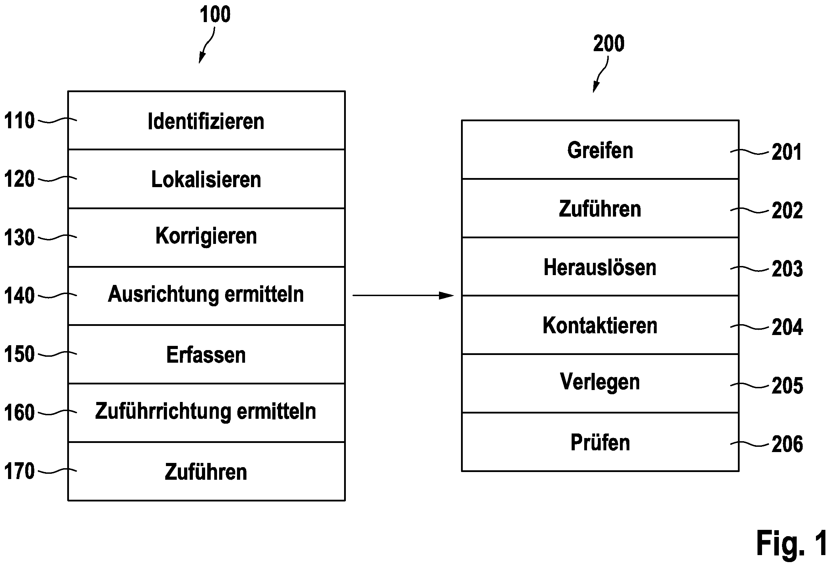

Demgemäß weist gemäß Figur 1 ein Verfahren für die elektrische Verkabelung elektronischer Komponenten im Schaltanlagenbau das Bereitstellen 100 einer Mehrzahl elektronischer Komponenten auf, die auf einem gemeinsamen Werkstück, beispielsweise auf einer Montageplatte montiert sind. Nach dem Bereitstellen des Werkstücks mit elektronischen Komponenten können diese in einem Schritt 200 verkabelt werden.

Das Bereitstellen 100 der elektronischen Komponenten auf dem Werkstück, insbesondere einer Montageplatte, kann das Engineering der Schaltanlage in einem ECAD-System umfassen. Dabei wird die zu erstellende Schaltanlage insoweit computergestützt entworfen, dass zumindest sämtliche Informationen für die Verkabelung der Komponenten vorhanden sind. Dies kann neben den einzelnen zu erzeugenden Kabelverbindungen die Anordnung und Art der einzelnen Komponenten umfassen, als auch die Art der vorhandenen Anschlussklemmen sowie deren individueller Zuführrichtung für ein Kabelende.

Die ECAD-Daten können jedoch auch Informationen umfassen, welche über die Verkabelung der Komponenten hinausgehen. Insbesondere können dies Informationen sein, welche die Bearbeitung der Montageplatte betreffen, beispielsweise die Ausbildung von Ausbrüchen in der Montageplatte, die für die Anordnung der Komponenten auf der Montageplatte oder für die Klimatisierung der Komponenten auf der Montageplatte erforderlich sind. Das ECAD-System kann insbesondere auch eine Reihenfolge vorgeben, in welcher die Komponenten miteinander verkabelt werden. Entsprechend dieser Reihenfolge können die Kabel in Form einer Kabelsequenz mit vorgegebener Kabelabfolge einem Roboter für die Verkabelung der elektronischen Komponenten zugeführt werden. Eine entsprechende Kabelsequenz ist aus der DE 10 2015 103 444 A1 bekannt.

Das Bereitstellen der Montageplatte kann weiterhin das Identifizieren 110 und das Lokalisieren 120 der elektronischen Komponenten auf dem gemeinsamen Werkstück, insbesondere der Montageplatte, aufweisen. Insbesondere ist es aufgrund von Fertigungstoleranzen bei der Anordnung der Komponenten auf dem Werkstück möglich, dass die tatsächliche Position sowie die tatsächliche Kabelzuführrichtung für die Verdrahtung der Komponenten von entsprechenden Daten, die beispielsweise über ein ECAD-System bereitgestellt sind, abweichen. So kann über das ECAD-System ein Schaltplan bereitgestellt sein, welcher die Anordnung der elektronischen Komponenten auf der Montageplatte sowie die genaue Verkabelung der einzelnen Komponenten miteinander wiedergibt. Der Schaltplan kann eine Ausgangspositionsinformation mindestens einer der Komponenten in Bezug auf das Werkstück aufweisen. Wurde im Rahmen des Identifizierens 110 und des Lokalisierens 120 der elektronischen Komponenten ermittelt, dass mindestens eine der Komponenten in Bezug auf das Werkstück eine gegenüber der Ausgangsinformation abweichende Position aufweist, kann nach erfolgtem Identifizieren 110 und Lokalisieren 120 die über das ECAD-System bereitgestellte Ausgangspositionsinformation entsprechend korrigiert werden (Schritt 130). Das Identifizieren 110 kann beispielsweise optisch oder elektromagnetisch erfolgen, beispielsweise durch optisches Auslesen eines ein- oder mehrdimensionalen Barcodes oder durch elektromagnetisches Auslesen eines RFID-Codes.

Weiterhin können in einem Schritt 140 eine Lage und eine Ausrichtung des elektrischen Anschlusses einer der elektronischen Komponenten ermittelt und mit einer vorgegebenen Information abgeglichen werden, oder falls diese nicht vorhanden ist, der vorhandenen Positionsinformation hinzugefügt werden. Wird eine Abweichung erfasst, kann die Vorgabeinformation entsprechend aktualisiert werden. Weiterhin können in einem Schritt 150 Störkonturen im Umfeld des elektrischen Anschlusses erfasst werden, wobei gegebenenfalls unter Berücksichtigung der Lage und der Ausrichtung des elektrischen Anschlusses sowie eventuell erfasster Störkonturen sowie gegebenenfalls unter weiterer Berücksichtigung von Bewegungsfreiheitsgraden des Roboters eine Zuführrichtung eines Kabelendes der Kabelsequenz zu dem Anschluss ermittelt wird.

Schließlich wird die Kabelsequenz in einem Schritt 170 einer Trenneinrichtung des multifunktionalen Endeffektors 4 zugeführt, mit der das in der Kabelsequenz endstellige Kabel mit dem Kabelende aus der Kabelsequenz herausgelöst oder herausgetrennt wird. Das Heraustrennen des endstelligen Kabels aus der Kabelsequenz kann vor dem Verkabeln des Kabelendes, das heißt vor der Kontaktierung des Kabelendes mit einem Anschluss einer elektronischen Komponente, erfolgen, oder erst danach.

In einem Schritt 200 werden die elektronischen Komponenten entsprechend einem vorgegebenen Schaltplan, der sich aus dem ECAD-System ableiten lässt oder von diesem unmittelbar bereitgestellt wird, in einer vorgegebenen Reihenfolge mit einem Roboter, beispielsweise mit mindestens einem Knickarmroboter, verkabelt. Dem Roboter wird eine Kabelsequenz aus vorkonfektionierten Kabeln zugeführt, wobei die einzelnen Kabel der Kabelsequenz in der vorgegebenen Reihenfolge angeordnet sind. Das Verkabeln umfasst das Greifen 201 eines Kabelendes der Kabelsequenz mit einem multifunktionalen Endeffektor des Roboters, das Zuführen 202 des Kabelendes einem elektrischen Anschluss einer der elektronischen Komponenten mit dem multifunktionalen Endeffektor sowie das Herauslösen 203 des Kabels aus der Kabelsequenz mit einer Trenneinheit des multifunktionalen Endeffektors. Für das Herauslösen eines Kabels aus der Kabelsequenz weist der Roboter eine Detektionshülse auf, durch welche die Kabelsequenz hindurchgeführt wird, wobei die Hülse einen Sensor aufweist, der einen Verbindungsbereich zwischen aufeinanderfolgenden Kabeln der Kabelsequenz erfasst. Nach der Lokalisierung des Verbindungsbereichs zwischen den beiden aufeinanderfolgenden Kabeln wird die Kabelsequenz in dem Schritt 170 der Trenneinrichtung des multifunktionalen Endeffektors so zugeführt, dass die Trenneinrichtung den Verbindungsbereich zwischen den aufeinanderfolgenden Kabeln heraustrennen kann. Ein geeignetes Trennmodul ist aus der DE 10 2014 116 772 A1 bekannt.

Das Verkabeln kann weiterhin das Kontaktieren 204 des im Schritt 203 herausgetrennten oder herausgelösten Kabels beispielsweise an einer Leiteranschlussklemme einer elektronischen Komponente aufweisen. Weiterhin kann das kontaktierte Kabel anschließend in einem Schritt 205 auf einem Werkstück, beispielsweise einer Montageplatte, insbesondere in einem Kabelkanal, der auf einer Montageplatte montiert ist, in einem Schritt 205 verlegt werden. Abschließend oder vorher kann in einem Schritt 206 die Kontaktierung des Kabels im Schritt 204 geprüft werden. Dies kann eine mechanische Prüfung (z.B. Abzugsprüfung) und/oder eine elektrische Prüfung (z.B. Kontaktwiderstand) umfassen. Alle Prüfschritte können von dem multifunktionalen Endeffektor ausgeführt werden.

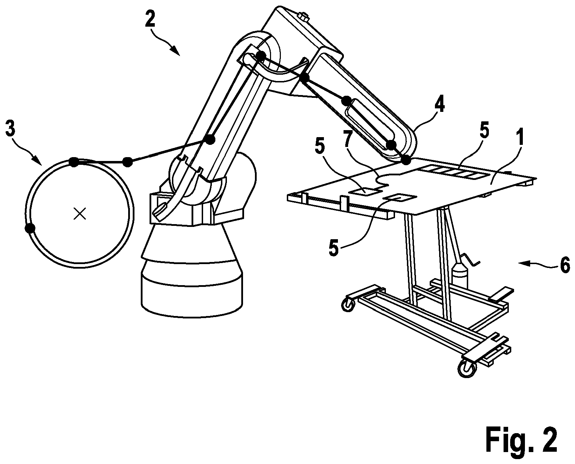

Die Figur 2 zeigt einen beispielhaften Aufbau einer Anordnung für die elektrische Verkabelung elektronischer Komponenten im Schaltanlagenbau. Diese besteht im Wesentlichen aus mindestens einem Knickarmroboter 2 mit einem multifunktionalen Endeffektor 4, wobei dem Knickarmroboter 2 eine Kabelsequenz 3 in Form einer Spule beigeordnet ist. Der multifunktionale Endeffektor 4 weist ein Transportsystem auf, über den dem multifunktionalen Endeffektor 4 die Kabelsequenz 3 zugeführt ist. Die Kabelsequenz 3 besteht aus einer Verkettung einer Vielzahl vorkonfektionierter Einzelkabel, die über ihre Kabelenden zu einer Kabelsequenz miteinander verbunden sind.

Der Endeffektor 4 weist weiterhin Mittel für die Lokalisierung und Identifizierung der Komponenten 5 auf der Montageplatte 1 auf. Wie zuvor mit Bezug auf Figur 1 beschrieben worden ist, kann dies insbesondere dazu dienen, eine tatsächliche Anordnung der Komponenten 5 auf der Montageplatte 1 zu erfassen und gegebenenfalls mit diesbezüglicher Vorgabeinformation, die über ein ECAD-System bereitgestellt sein kann, abzugleichen und gegebenenfalls zu korrigieren. Es ist weiterhin denkbar, dass der Endeffektor 4 dazu eingerichtet ist, den jeweiligen Anschluss der Komponenten 5 zu lokalisieren und gegebenenfalls eine optimale Zuführrichtung eines Kabelendes zu dem Anschluss zu ermitteln, wobei gegebenenfalls auch Störkonturen, die mit dem Endeffektor 4 erfasst worden sind, berücksichtigt werden können. Der Endeffektor 4 weist weiterhin eine Trenneinrichtung auf, über die das jeweils endstellige Kabel von der Kabelsequenz 3 abgetrennt werden kann. Das Abtrennen des Kabels aus der Kabelsequenz 3 kann das Heraustrennen eines Verbindungsbereichs zwischen dem endstelligen Kabel und einem in der Kabelsequenz 3 unmittelbar nachfolgenden Kabel aufweisen.

Die Anordnung weist weiterhin einen Werkstückträger 6 auf, der dazu eingerichtet ist, die Montageplatte in Bezug auf den Knickarmroboter zu verschwenken, so dass eine optimale Verkabelung, insbesondere eine Zuführung des Kabelendes an den Anschluss einer jeweiligen Komponente 5 möglich ist. Mit Hilfe des Werkstückträgers 6 können somit über die Bewegungsfreiheitsgrade des Knickarmroboters 2 hinaus weitere Bewegungsfreiheitsgrade bereitgestellt werden, wodurch die Verkabelung der Komponenten, insbesondere die Zuführung der Kabelenden an die Anschlüsse der elektronischen Komponenten 5 weiter vereinfacht wird.

Der Werkstückträger 6 kann weiterhin die Funktion aufweisen, das Werkstück 1, insbesondere die Montageplatte, zumindest zwischen einer vertikalen Ausrichtung, in welcher der Werkstückträger 6 das Werkstück 1 entgegennimmt und einer horizontalen Ausrichtung, oder einer Ausrichtung, die gegenüber der Vertikalen um einen Winkel zwischen 1° und 89° versetzt ist, zu verschwenken.

Der Werkstückträger 6 kann weiterhin dazu eingerichtet sein, die Montageplatte 1 zwischen den einzelnen Bearbeitungsstationen einer Wertschöpfungskette zur Herstellung einer Schaltanlage zu transportieren. Insbesondere kann der Werkstückträger 6 dazu eingerichtet sein, das Werkstück 1, insbesondere die Montageplatte, über die Seitenwand eines Schaltschrankgehäuses aus dem Schaltschrankgehäuse zu entfernen, indem die Montageplatte 1 parallel zur Rückwand und zur Türseite des Schaltschrankgehäuses aus dem Schaltschrankgehäuse entnommen wird, anschließend den einzelnen Bearbeitungsstationen, insbesondere auch der Anordnung gemäß Figur 2, zugeführt wird, um anschließend, das heißt nach Fertigstellung der Schaltanlage auf der Montageplatte, wieder in das Schaltschrankgehäuse verlagert zu werden, so dass während sämtlicher Bearbeitungsschritte der Montageplatte und dazwischen die Montageplatte niemals den Werkstückträger 6 verlassen muss.

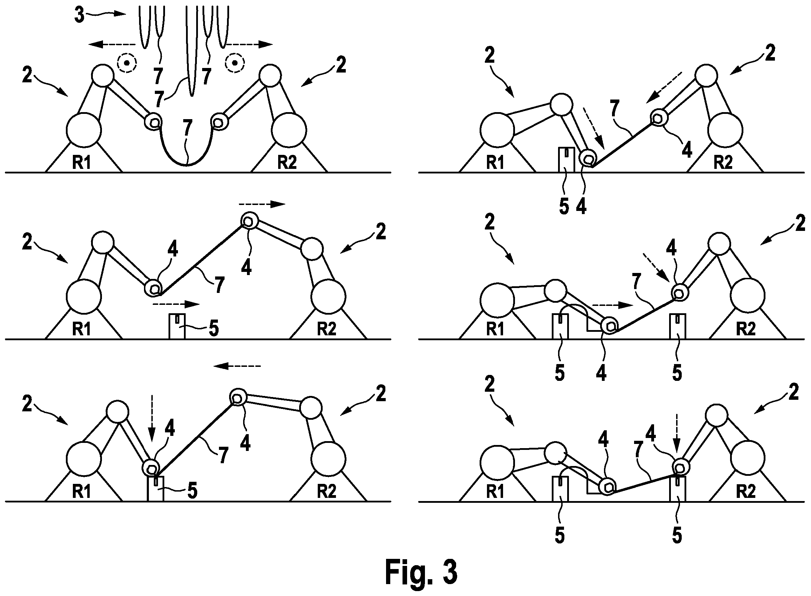

Die Figur 3 zeigt einen beispielhaften Bewegungsablauf einer Anordnung aus zwei als Knickarmroboter ausgebildeten Robotern 2, die kollaborativ ein erfindungsgemäßes Verfahren, beispielsweise das Verfahren, welches mit Bezug auf Figur 1 beschrieben worden ist, ausführen. Lediglich zur Vereinfachung der Darstellung der Erfindung ist das Verfahren in sechs Teilschritte unterteilt. Die Kabelsequenz 3 ist vorliegend beispielhaft in Form eines Kabelmagazins bereitgestellt, das oberhalb von den Robotern 2 angeordnet ist. Hinsichtlich alternativer Weisen der Bereitstellung der Kabelsequenz sowie hinsichtlich der Heraustrennung der einzelnen Kabel aus der Kabelsequenz wird auf die vorangegangenen Ausführungsformen gemäß den Figuren 1 und 2 verwiesen.

Bei der in Figur 3 gezeigten Ausführungsform ist der Bewegungsablauf der kollaborativ arbeitenden Roboter 2 in sechs Teilschritten wiedergegeben, wobei der Teilschritt 1 gemäß Figur 3 den Beginn des Bewegungsablaufs zeigt, in welchem ein Kabel 7 von den beiden Robotern 2 aus der Kabelsequenz 3 herausgetrennt oder herausgelöst und an jeweils einem seiner gegenüberliegenden Enden von einem der Roboter 2 mittels seines Endeffektors 4 aufgenommen ist. Das Kabel 7 ist üblicherweise und wie dargestellt ein biegeschlaffes Teil, welches nach dem Aufnehmen durch die beiden Roboter 2 auf eine mechanische Spannung gebracht wird, so dass das Kabel eine im Wesentlichen gerade Form annimmt, wie es in Figur 2 gezeigt und während des gesamten nachfolgenden Prozesse beibehalten wird, um ein versehentliches Verheddern des Kabels 7, etwa an Komponenten auf einem Werkstück zu vermeiden.

In dem Teilschritt 2 führt der in der Darstellung linke Roboter 2 das von ihm gegriffene Kabelende einer Kontaktklemme einer elektronischen Komponente 5 zu, wobei von dem in der Darstellung rechten Roboter 2 das Kabel 7 entsprechend nachgeführt wird.

In dem Schritt 3 kontaktiert der in der Darstellung linke Roboter 2 das ihm zugeordnete Kabelende des Kabels 7 an der Komponente 5. Dazu kann der in der Darstellung linke Roboter 2 das Kabelende in eine Leiteranschlussklemme der Komponente 5 einführen. Diesem Schritt kann gegebenenfalls ein Prüfschritt nachfolgen, beispielsweise in Form eines Abzugstests, bei dem der in der Darstellung linke Roboter 2 das kontaktierte Kabelende mit einer definierten Abzugskraft aus der Leiteranschlussklemme der Komponente 5 herauszuziehen versucht. In einem vierten Schritt wird das Kabel 7 beispielsweise entlang eines Kabelkanals ausgehend von der kontaktierten Komponente 5 verlegt und einer weiteren Komponente 5 in der Darstellung rechts von der kontaktierten Komponente 5 angenähert, mit welcher die in der Darstellung linke Komponente 5 verdrahtet werden soll.

In den Schritten 5 und 6 wird das weitere Kabelende des Leiters 7 der weiteren elektronischen Komponente 5 zugeführt und mit dieser kontaktiert, wobei der in der Darstellung linke Roboter das Kabel in dem Bereich zwischen den Komponenten 5 fixiert, beispielsweise in einem Kabelkanal, in dem das Kabel 7 im Schritt 4 verlegt worden ist, um ein versehentliches Herausspringen des Kabels 7 aus seiner verlegten Bahn, beispielsweise einem Kabelkanal, zu verhindern.

Nachdem im Schritt 6 auch das zweite Kabelende mit der weiteren Komponente 5 kontaktiert worden ist, kann auch die Kontaktierung gegebenenfalls mechanisch und/oder elektrisch geprüft werden, beispielsweise mit Hilfe eines Abzugstests oder einer Überprüfung des ohmschen Kontaktwiderstands.

Nach dem Schritt 6 können die beiden Roboter 2 ein weiteres Kabel 7 aus der Kabelsequenz 3 entnehmen und das Verfahren kann dementsprechend mit dem ersten Schritt von vorne beginnen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Werkstück
- 2: Roboter
- 3: Kabelsequenz
- 4: Endeffektor
- 5: Komponente
- 6: Werkstückträger
- 7: Kabel
- 100: Bereitstellen
- 110: Identifizieren
- 120: Lokalisieren
- 130: Korrigieren
- 140: Lage- und Ausrichtungsermittlung
- 150: Erfassen von Störkonturen
- 160: Ermitteln einer Zuführrichtung
- 170: Zuführen
- 200: Verkabeln
- 201: Greifen
- 202: Zuführen des Kabelendes
- 203: Herauslösen des Kabels
- 204: Kontaktieren
- 205: Verlegen
- 206: Prüfen

## Patentansprüche

1. Verfahren für die elektrische Verkabelung elektronischer Komponenten (5) im Schaltanlagenbau, wobei das Verfahren die Schritte aufweist:
a. Bereitstellen (100) einer Mehrzahl elektronischer Komponenten (5), die auf einem gemeinsamen Werkstück (1), insbesondere auf einer Montageplatte, montiert sind;
b. Verkabeln (200) der elektronischen Komponenten (5) entsprechend einem vorgegebenen Schaltplan und in einer vorgegebenen Reihenfolge mit mindestens einem Roboter (2), wobei einem multifunktionalen Endeffektor (4) des mindestens einen Roboters (2) über ein Transportsystem eine Kabelsequenz (3) aus mehreren miteinander verbundenen, vorkonfektionierten Kabeln zugeführt wird, wobei die Kabel in der vorgegebenen Reihenfolge in der Kabelsequenz (3) angeordnet sind;
wobei das Verkabeln (200) das Greifen (201) eines Kabelendes der Kabelsequenz (3) mit einem Greifer des multifunktionalen Endeffektors (4) des mindestens einen Roboters (2), das Zuführen (202) des Kabelendes einem elektrischen Anschluss einer der elektronischen Komponenten (5) mit dem multifunktionalen Endeffektor (4) und das Herauslösen (203) des Kabels aus der Kabelsequenz (3) mit einer Trenneinheit des multifunktionalen Endeffektors (4) aufweist, ferner aufweisend Zuführen der Kabelsequenz (3) für das Herauslösen (203) des Kabels aus der Kabelsequenz (3) der Trenneinheit des multifunktionalen Endeffektor (4), mit der das in der Kabelsequenz (3) endstellige Kabel mit dem Kabelende aus der Kabelsequenz (3) herausgetrennt oder herausgelöst wird, wobei die Kabelsequenz für das Herauslösen eines Kabels aus der Kabelsequenz durch eine Detektionshülse des Roboters hindurchgeführt wird, wobei ein Sensor der Detektionshülse einen Verbindungsbereich zwischen aufeinanderfolgenden Kabeln der Kabelsequenz erfasst.

2. Verfahren nach Anspruch 1, das weiterhin das Identifizieren (110) und das Lokalisieren (120) der elektronischen Komponenten (5) auf dem gemeinsamen Werkstück (1) aufweist, wobei
a. der Schaltplan eine Ausgangspositionsinformation mindestens einer der Komponenten (5) in Bezug auf das Werkstück (1) aufweist, wobei das Verfahren weiterhin das Korrigieren (130) der Ausgangspositionsinformation aufweist, wenn bei dem Identifizieren (110) und Lokalisieren (120) eine Abweichung zwischen der Ausgangspositionsinformation und einer ermittelten Positionsinformation mindestens einer Komponente (5) erfasst worden ist; und/oder
b. eine Lage und Ausrichtung des elektrischen Anschlusses einer der elektronischen Komponenten (5) ermittelt (140) wird, wobei weiterhin Störkonturen im Umfeld des elektrischen Anschlusses erfasst (150) werden, und wobei unter Berücksichtigung der Lage und der Ausrichtung des elektrischen Anschlusses sowie eventuell erfasster Störkonturen sowie gegebenenfalls unter weiterer Berücksichtigung von Bewegungsfreiheitsgraden des mindestens einen Roboters (2) eine Zuführrichtung des Kabelendes zu dem Anschluss ermittelt (160) wird.

3. Verfahren nach Anspruch 2, bei dem
a. der multifunktionale Endeffektor (4) das Kabelende loslässt, nachdem das Kabelende an dem elektrischen Anschluss einer der elektronischen Komponenten (5) kontaktiert worden ist, woraufhin
b. das das Kabelende aufweisende Kabel durch die Detektionshülse des multifunktionalen Endeffektor (4) hindurch geleitet wird, die eine Kabelverbindungsstellendetektionseinrichtung ist, und nach dem Erkennen des Verbindungsbereichs, an der das Kabel mit dem Kabelende mit einem in der Sequenz folgenden Kabel über eine Verbindungsstelle verbunden ist, der Verbindungsbereich aus der Kabelsequenz (3) herausgetrennt oder herausgelöst wird, und
c. das dem Kabelende gegenüber liegende Kabelende mit dem multifunktionalen Endeffektor (4) gegriffen und einem weiteren elektrischen Anschluss der elektronischen Komponenten (5) zugeführt wird.

4. Verfahren nach einem der vorangegangenen Ansprüche, bei dem ein in der Kabelsequenz (3) endstelliges Kabel, das das Kabelende aufweist, aus der Kabelsequenz (3) herausgetrennt oder herausgelöst wird, nachdem das Kabelende an dem elektrischen Anschluss einer der elektronischen Komponenten (5) kontaktiert worden ist.

5. Verfahren nach Anspruch 4, bei dem der mindestens eine Roboter (2) nach dem Kontaktieren des Kabelendes mit seinem multifunktionalen Endeffektor (4) einen Verlegeweg des das Kabelende aufweisenden Kabels abfährt, wobei das Kabel mit einer Vorschubgeschwindigkeit durch den Endeffektor (4) transportiert wird, die einer Vorschubgeschwindigkeit des Endeffektors (4) entlang des Verlegewegs entspricht.

6. Verfahren nach einem der vorangegangen Ansprüche, bei dem nach dem Zuführen des Kabelendes einem elektrischen Anschluss das Kabelende an dem elektrischen Anschluss kontaktiert wird, wozu
a. entweder mit dem multifunktionalen Endeffektor (4) das Kabelende in eine Leiteranschlussklemme mit Direktstecktechnik des elektrischen Anschlusses eingesteckt wird; oder
b. mit dem multifunktionalen Endeffektor (4) eine Federzugklemme des elektrischen Anschlusses entgegen ihrer Vorspannung geöffnet, darauf hin das Kabelende in die Federzugklemme eingesteckt und anschließend die vorgespannte Federzugklemme von dem multifunktionalen Endeffektor (4) wieder losgelassen wird, oder
c. mit dem multifunktionalen Endeffektor (4) eine Schraube einer Schraubklemme des elektrischen Anschlusses gelöst, darauf hin das Kabelende in die Schraubklemme eingesteckt und anschließend die Schraube der Schraubklemme mit dem multifunktionalen Endeffektor (4) wieder angezogen wird.

7. Verfahren nach einem der vorangegangen Ansprüche, bei dem das Werkstück (1) eine Montageplatte für den Schaltanlagenbau ist, die auf einem mobilen Werkstückträger (6) oder einem sonstige Fördersystem, etwa einer Rollenbahn oder einem Kettenförderer, zwischen verschiedenen Bearbeitungsstationen transportiert wird, wobei für die Bereitstellung der Mehrzahl elektronischer Komponenten (5) auf der Montagplatte die Montageplatte zunächst auf dem Werkstückträger befestigt und erst dann wieder von dem Werkstückträger gelöst wird, wenn die Montageplatte mechanisch bearbeitet worden ist, wenn die elektrischen Komponenten (5) auf der Montageplatte befestigt worden sind, und wenn sämtliche Verdrahtungen gemäß dem Schaltplan hergestellt worden sind, wozu die Montageplatte von dem mobilen Werkstückträger zwischen mindestens einer ersten Bearbeitungsstation für die mechanische Bearbeitung, einer zweiten Bearbeitungsstation für die Montage der elektrischen Komponenten (5) auf der Montageplatte und einer dritten Bearbeitungsstation für die elektrische Verkabelung der elektronischen Komponenten (5) transportiert worden ist.

8. Verfahren nach Anspruch 7, bei dem die Montageplatte in einer vertikalen Ausrichtung im Innern eines Schaltschranks montiert bereitgestellt wird und in dieser Position von dem mobilen Werkstückträger (6) empfangen und an diesem montiert wird, wobei die Montageplatte anschließend mit dem mobilen Werkstückträger aus dem Schaltschrankinnern entfernt und den Bearbeitungsstationen zugeleitet wird, wozu die Montageplatte für die Bearbeitung an mindestens einer der Bearbeitungsstationen aus der vertikalen Ausrichtung in eine horizontale Ausrichtung oder eine gegenüber der Vertikalen angewinkelte Ausrichtung geschwenkt wird, wobei die Montageplatte nach einer Endmontage und gegebenenfalls technischer Überprüfung wieder in die Vertikalausrichtung gebracht und in dieser mit dem mobilen Werkstückträger in das Schaltschrankinnere eingesetzt und dort mit dem Schaltschrankrahmengestell verbunden wird.

9. Verfahren nach Anspruch 8, bei dem die Montageplatte mit dem mobilen Werkstückträger in der vertikalen Ausrichtung über eine offene Seitenwand des Schaltschranks parallel zur Türseite und Rückseite des Schaltschranks aus dem Schaltschrank bewegt wird.

10. Verfahren nach einem der vorangegangen Ansprüche, bei dem nachdem das Kabelende an dem elektrischen Anschluss einer der elektronischen Komponenten (5) kontaktiert und festgelegt worden ist, mit dem multifunktionalen Endeffektor (4) eine Funktions- und Qualitätskontrolle durchgeführt wird, indem der multifunktionale Endeffektor (4) einen elektrischen Übergangswiderstand zwischen dem kontaktierten Kabel und dem elektrischen Anschluss ermittelt, oder das Kabelende mit einer bestimmten Kraft entgegen einer Einsteckrichtung des Kabelendes in eine Federzugklemme oder eine Schraubklemme des Anschlusses beaufschlagt.

11. Anordnung zur Durchführung eines Verfahrens nach einem der vorangegangen Ansprüche, wobei die Anordnung mindestens einen Roboter (2), insbesondere einen Knickarmroboter, mit einem multifunktionalen Endeffektor (4) aufweist, wobei der mindestens eine Roboter (2) ein Transportsystem aufweist, über das dem multifunktionalen Endeffektor (4) eine Kabelsequenz (3) aus mehreren miteinander verbundenen Kabeln zuführbar ist, wobei der multifunktionale Endeffektor (4) einen Greifer zum Greifen eines Kabelendes der Kabelsequenz (3) aufweist, wobei der multifunktionale Endeffektor (4) des Roboters (2) für das Herauslösen eines in der Kabelsequenz (3) endstelligen Kabels aus der Kabelsequenz eine Trenneinrichtung aufweist, **dadurch gekennzeichnet, dass** der Roboter eine Detektionshülse mit einem Sensor aufweist, durch welche die Kabelsequenz (3) hindurchführbar ist, wobei der Sensor dazu eingerichtet ist, einen Verbindungsbereich zwischen aufeinanderfolgenden Kabeln der Kabelsequenz zu erfassen.

12. Anordnung nach Anspruch 11, die einen ersten und einen zweiten Roboter (2) mit einem multifunktionalen Endeffektor (4) aufweist, wobei die multifunktionalen Endeffektoren (4) der beiden Roboter (2) unterschiedliche oder dieseleben Funktionalitäten aufweisen, wobei der erste Roboter (2) dazu eingerichtet ist, ein erstes der beiden Kabelenden eines Kabels aus der Kabelsequenz einem elektrischen Anschluss einer ersten der elektronischen Komponenten (5) zuzuführen, und wobei der zweite Roboter (2) dazu eingerichtet ist, ein zweites der beiden Kabelenden des Kabels einem elektrischen Anschluss einer zweiten der elektronischen Komponenten (5) zuzuführen.

13. Anordnung nach Anspruch 12 oder 13, die einen ersten und einen zweiten Roboter (2) mit einem multifunktionalen Endeffektor (4) aufweist, wobei ein erster der Roboter (2) ein erstes Ende eines biegeschlaffen Kabels und ein zweiter der Roboter (2) ein zweites Ende des biegeschlaffen Kabels halten kann, und wobei die Roboter (2) dazu eingerichtet sind, das biegeschlaffe Kabel auf einer mechanischen Spannung zu halten, so dass das Kabel zwischen den Enden im Wesentlichen gerade ist.

14. Anordnung nach einem der Ansprüche 11 bis 13, die weiterhin einen Werkstückträger aufweist, der dazu eingerichtet ist, ein Werkstück, insbesondere eine Montageplatte festzuhalten, das Werkstück mindestens einer Bearbeitungsstation, insbesondere dem mindestens einen Roboter (2), zuzuführen und in Bezug auf die Bearbeitungsstation auszurichten.

15. Anordnung nach einem der Ansprüche 11 bis 14, bei der der multifunktionale Endeffektor (4) einen Sensor aufweist, der dazu eingerichtet ist, eine Position einer zu verkabelnden elektrischen Komponente (5) auf dem Werkstück und/oder eine Position und/oder eine Ausrichtung eines Anschlusses der elektrischen Komponente zu erfassen.

16. Anordnung nach Anspruch 15, die eine Datenverarbeitungsanlage aufweist, in der ein Schaltplan einer auf dem Werkstück zu erzeugenden elektrischen Schaltanlage hinterlegt ist, wobei die Datenverarbeitungsanlage dazu eingerichtet ist, in dem Schaltplan hinterlegte Verdrahtungsinformation der auf dem Werkstück angeordneten Komponenten (5) um eine mit dem Sensor erfasste Positionsinformation und/oder Ausrichtungsinformation zu ergänzen, oder, wenn der Schaltplan bereits Ausgangsinformation über die Position und/oder die Ausrichtung aufweist, diese Ausgangsinformation entsprechend der erfassten Positionsinformation und/oder Ausrichtungsinformation zu aktualisieren.

17. Anordnung nach Anspruch 15 oder 16, bei der für die Ansteuerung des mindestens einen Knickarmroboters (2) als eine erste Eingabe ECAD-Daten zugrunde gelegt sind, die eine Planung der mit der Anordnung zu erzeugenden Schaltanlage beinhalten, wobei für die Ansteuerung des mindestens einen Knickarmroboters (2) als eine zweite Eingabe die mit dem Sensor erfasste Positionsinformation und/oder Ausrichtungsinformation ist, und wobei eine Datenverarbeitungsanlage der Anordnung dazu eingerichtet ist, aus der ersten und der zweiten Eingabe die Ansteuerung des mindestens einen Knickarmroboters (2) zu erzeugen.

## Claims

1. A method for the electrical wiring of electronic components (5) in switchgear construction, the method comprising the steps:
a. Providing (100) a plurality of electronic components (5) mounted on a common workpiece (1), in particular on a mounting plate;
b. Wiring (200) the electronic components (5) according to a predetermined circuit diagram and in a predetermined sequence with at least one robot (2), wherein a multifunctional end effector (4) of the at least one robot (2) is supplied via a transport system with a cable sequence (3) consisting of several interconnected, prefabricated cables, wherein the cables are arranged in the predetermined sequence in the cable sequence (3);
wherein said wiring (200) comprises gripping (201) a cable end of said cable sequence (3) with a gripper of said multifunctional end effector (4) of said at least one robot (2), feeding (202) said cable end to an electrical connection of one of said electronic components (5) with said multifunctional end effector (4), and detaching (203) said cable from said cable sequence (3) with a separating unit of said multifunctional end effector (4),
further comprising
feeding the cable sequence (3) for detaching (203) the cable from the cable sequence (3) to the separating unit of the multifunctional end effector (4), with which the cable terminated in the cable sequence (3) is separated or detached from the cable sequence (3) with the cable end, wherein the cable sequence for detaching a cable from the cable sequence is passed through a detection sleeve of the robot, wherein a sensor of the detection sleeve detects a connection area between successive cables of the cable sequence.

2. The method of claim 1, further comprising identifying (110) and locating (120) the electronic components (5) on the common workpiece (1), wherein
a. the circuit diagram comprises initial position information of at least one of the components (5) with respect to the workpiece (1), the method further comprising correcting (130) the initial position information when a discrepancy between the initial position information and a determined position information of at least one component (5) has been detected in identifying (110) and locating (120); and/or
b. a position and orientation of the electrical connection of one of the electronic components (5) is determined (140), with interference contours in the environment of the electrical connection also being detected (150), and with a feed direction of the cable end to the connection being determined (160) taking into account the position and orientation of the electrical connection and any interference contours detected and, if appropriate, taking further account of degrees of freedom of movement of the at least one robot (2).

3. The method according to claim 2, wherein
a. the multifunctional end effector (4) releases the cable end after the cable end has been contacted at the electrical connection of one of the electronic components (5), whereupon
b. the cable having the cable end is passed through the detection sleeve of the multifunctional end effector (4) which is a cable junction detection device, and after detecting the junction area where the cable having the cable end is connected to a cable following in the sequence via a junction, the junction area is cut or detached from the cable sequence (3), and
c. the cable end opposite the cable end is gripped with the multifunctional end effector (4) and fed to a further electrical connection of the electronic components (5).

4. The method according to any one of the preceding claims, wherein a cable terminated in the cable sequence (3) comprising the cable end is cut or detached from the cable sequence (3) after the cable end has been contacted at the electrical connection of one of the electronic components (5).

5. The method according to claim 4, wherein the at least one robot (2), after contacting the cable end with its multifunctional end effector (4), traverses a laying path of the cable comprising the cable end, the cable being transported through the end effector (4) at a feed rate corresponding to a feed rate of the end effector (4) along the laying path.

6. The method according to any one of the preceding claims, wherein after feeding the cable end to an electrical terminal, the cable end is contacted at the electrical terminal, for which purpose
a. either with the multifunctional end effector (4) the cable end is plugged into a conductor terminal with direct plug-in technology of the electrical connection; or
b. using the multifunctional end effector (4), a spring-loaded terminal of the electrical connection is opened against its pretension, the cable end is then inserted into the spring-loaded terminal and the pretensioned spring-loaded terminal is then released again by the multifunctional end effector (4), or
c. a screw of a screw terminal of the electrical connection is loosened with the multifunctional end effector (4), then the cable end is inserted into the screw terminal and then the screw of the screw terminal is tightened again with the multifunctional end effector (4).

7. The method according to one of the preceding claims, wherein the workpiece (1) is a mounting plate for switchgear construction, which is transported between different processing stations on a mobile workpiece carrier (6) or other conveyor system, such as a roller conveyor or chain conveyor, wherein for the provision of the plurality of electronic components (5) on the mounting plate, the mounting plate is first fastened to the workpiece carrier and is only detached from the workpiece carrier again when the mounting plate has been mechanically processed, when the electrical components (5) have been fixed on the mounting plate, and when all the wiring has been made in accordance with the circuit diagram, for which purpose the mounting plate has been transported from the mobile workpiece carrier between at least a first machining station for the mechanical machining, a second machining station for the mounting of the electrical components (5) on the mounting plate and a third machining station for the electrical wiring of the electronic components (5).

8. The method of claim 7, wherein the mounting plate is provided mounted in a vertical orientation inside a control cabinet and is received in this position by the mobile workpiece carrier (6) and mounted thereon, the mounting plate then being removed from the interior of the control cabinet with the mobile workpiece carrier and fed to the machining stations, for which purpose the mounting plate for machining at at least one of the machining stations is pivoted out of the vertical orientation into a horizontal orientation or an orientation angled with respect to the vertical, the mounting plate being brought back into the vertical orientation after final assembly and, if necessary, technical inspection and, in this orientation, being inserted into the switch cabinet interior with the mobile workpiece carrier and being connected there to the switch cabinet frame.

9. The method of claim 8, wherein the mounting plate with the mobile workpiece carrier is moved out of the control cabinet in the vertical orientation over an open side wall of the control cabinet parallel to the door side and rear of the control cabinet.

10. The method according to any one of the preceding claims, in which, after the cable end has been contacted and fixed to the electrical terminal of one of the electronic components (5), a functional and quality check is carried out with the multifunctional end effector (4), in that the multifunctional end effector (4) determines an electrical contact resistance between the contacted cable and the electrical terminal, or applies a specific force to the cable end counter to an insertion direction of the cable end into a spring-loaded terminal or a screw terminal of the terminal.

11. An arrangement for carrying out a method according to one of the preceding claims, the arrangement having at least one robot (2), in particular an articulated-arm robot, with a multifunctional end effector (4), the at least one robot (2) having a transport system via which a cable sequence (3) comprising a plurality of interconnected cables can be fed to the multifunctional end effector (4), the multifunctional end effector (4) having a gripper for gripping a cable end of the cable sequence (3), wherein the multifunctional end effector (4) of the robot (2) has a separating device for separating a cable terminated in the cable sequence (3) from the cable sequence, **characterized in that** the robot has a detection sleeve with a sensor through which the cable sequence (3) can be passed, the sensor being arranged to detect a connection region between successive cables of the cable sequence.

12. The arrangement according to claim 11, comprising a first and a second robot (2) with a multifunctional end effector (4), wherein the multifunctional end effectors (4) of the two robots (2) have different or these same functionalities, wherein the first robot (2) is adapted to supply a first one of the two cable ends of a cable from the cable sequence to an electrical terminal of a first one of the electronic components (5), and wherein the second robot (2) is adapted to supply a second one of the two cable ends of the cable to an electrical terminal of a second one of the electronic components (5).

13. The arrangement according to claim 12 or 13, comprising first and second robots (2) having a multifunctional end effector (4), wherein a first of said robots (2) is capable of holding a first end of a bendable cable and a second of said robots (2) is capable of holding a second end of said bendable cable, and wherein said robots (2) are adapted to hold said bendable cable in mechanical tension such that said cable is substantially straight between said ends.

14. The arrangement according to any one of claims 11 to 13, further comprising a workpiece carrier which is adapted to hold a workpiece, in particular a mounting plate, to feed the workpiece to at least one processing station, in particular to the at least one robot (2), and to align it with respect to the processing station.

15. The arrangement according to any one of claims 11 to 14, wherein the multifunctional end effector (4) comprises a sensor adapted to detect a position of an electrical component (5) to be wired on the workpiece and/or a position and/or an orientation of a terminal of the electrical component.

16. The arrangement according to claim 15, which comprises a data processing system in which a circuit diagram of an electrical switching system to be produced on the workpiece is stored, the data processing system being set up to supplement wiring information, stored in the circuit diagram, of the components (5) arranged on the workpiece with position information and/or alignment information detected with the sensor, or, if the circuit diagram already has output information about the position and/or the alignment, to update this output information in accordance with the detected position information and/or alignment information.

17. The arrangement according to claim 15 or 16, in which the control of the at least one jointed-arm robot (2) is based on ECAD data as a first input, which data contain a planning of the switchgear to be generated with the arrangement, wherein the position information and/or alignment information detected with the sensor is as a second input for the control of the at least one jointed-arm robot (2), and wherein a data processing system of the arrangement is set up to generate the control of the at least one jointed-arm robot (2) from the first and the second input.

## Revendications

1. Procédé pour le câblage électrique de composants électroniques (5) lors de la construction d'une installation de commutation, dans lequel le procédé comprend les étapes suivantes :
a. mise à disposition (100) d'une pluralité de composants électroniques (5) qui sont montés sur une pièce commune (1), plus particulièrement sur une plaque de montage ;
b. câblage (200) des composants électroniques (5) conformément à un schéma de branchement et dans un ordre prédéterminé avec au moins un robot (2), dans lequel, dans un effecteur d'extrémité multifonctionnel (4) de l'au moins un robot (2), par l'intermédiaire d'un système de transport, est introduite une séquence de câbles (3) constituée de plusieurs câbles pré-confectionnés reliés entre eux, dans lequel les câbles sont disposés dans la séquence de câbles (3) dans l'ordre prédéterminé ; dans lequel le câblage (200) comprend la préhension (201) d'une extrémité de câble
de la séquence de câbles (3) avec un préhenseur de l'effecteur d'extrémité multifonctionnel (4) de l'au moins un robot (2), l'introduction (202) de l'extrémité de câble dans un raccord électrique d'un des composants électroniques (5) avec l'effecteur d'extrémité multifonctionnel (4) et le détachement (203) du câble de la séquence de câbles (3) avec une unité de séparation de l'effecteur d'extrémité multifonctionnel (4),
comprenant en outre, pour le détachement (203) du câble de la séquence de câbles (3), l'introduction de la séquence de câbles (3) dans l'unité de séparation de l'effecteur d'extrémité multifonctionnel (4), avec laquelle le dernier câble dans la séquence de câble (3) est séparée ou détachée, avec l'extrémité de câble, de la séquence de câbles (3), dans lequel, pour le détachement d'un câble de la séquence de câbles, la séquence de câbles est guidée à travers un manchon de détection du robot ; dans lequel un capteur du manchon de détection détecte une zone de liaison entre les câbles successifs de la séquence de câbles.

2. Procédé selon la revendication 1, qui comprend en outre l'identification (110) et la localisation (120) des composants électroniques (5) sur la pièce commune (1), dans lequel
a. le schéma de branchement comprend une information de position initiale d'au moins un des composants (5) par rapport à la pièce (1), dans lequel le procédé comprend en outre la correction (130) de l'information de position initiale lorsque, lors de l'identification (110) et de la localisation (120), un écart a été détecté entre l'information de position initiale et l'information de position déterminée d'au moins un composant (5) ; et/ou
b. une position et une orientation du raccord électrique d'un des composants électroniques (5) est déterminé (140), dans lequel, en outre, les contours d'encombrement autour du raccord électrique sont détectés (150) et dans lequel, en tenant compte de la position et de l'orientation du raccord électrique, ainsi que des éventuels contours d'encombrement détectés et, le cas échéant, en tenant compte en outre des degrés de liberté de mouvement de l'au moins un robot (2), une direction d'introduction de l'extrémité du câble dans le raccord est déterminée (160).

3. Procédé selon la revendication 2, dans lequel
a. l'effecteur d'extrémité multifonctionnel (4) relâche l'extrémité du câble lorsque l'extrémité du câble a été mise en contact avec le raccord électrique d'un des composants électroniques (5),
b. le câble comprenant l'extrémité de câble est guidé à travers le manchon de détection de l'effecteur d'extrémité multifonctionnel (4), qui est un dispositif de détection de point de raccordement de câble et, après la détection de la zone de raccordement à laquelle le câble avec l'extrémité de câble est relié, par l'intermédiaire d'un point de raccordement, avec un câble suivant de la séquence, la zone de raccordement est séparée ou détachée de la séquence de câbles (3) et
c. l'extrémité de câble opposée à cette extrémité de câble est saisie avec l'effecteur d'extrémité multifonctionnel (4) et introduite dans un autre raccord électrique des composants électroniques (5).

4. Procédé selon l'une des revendications précédentes, dans lequel un câble terminal de la séquence de câbles (3), qui comprend l'extrémité de câble, est séparé ou détaché de la séquence de câbles (3) lorsque l'extrémité du câble a été mis en contact avec le raccord électrique d'un des composants électroniques (5).

5. Procédé selon la revendication 4, dans lequel l'au moins un robot (2) parcourt, après la mise en contact de l'extrémité du câble avec son effecteur d'extrémité multifonctionnel (4), un trajet de pose du câble comprenant l'extrémité de câble, dans lequel le câble est transporté par l'effecteur d'extrémité (4) avec une vitesse d'avance qui correspond à une vitesse d'avance de l'effecteur d'extrémité (4) le long du trajet de pose.

6. Procédé selon l'une des revendications précédentes, dans lequel, après l'introduction de l'extrémité du câble dans un raccord électrique, l'extrémité de câble est mise en contact avec le raccord électrique,
a. l'extrémité du câble étant pour cela insérée dans une borne de raccordement de conducteur avec une technique d'insertion directe du raccord électrique avec l'effecteur d'extrémité multifonctionnel (4) ; ou
b. une borne à ressort du raccord électrique est ouverte à l'encontre de sa précontrainte avec l'effecteur d'extrémité multifonctionnel (4), l'extrémité du câble étant ensuite insérée dans la borne à ressort puis la borne à ressort précontrainte est relâchée par l'effecteur d'extrémité multifonctionnel (4) ou
c. une vis d'une borne à vis du raccord électrique est desserrée avec l'effecteur d'extrémité multifonctionnel (4), l'extrémité du câble étant ensuite insérée dans la borne à vis puis le câble de la borne à vis est resserrée avec l'effecteur d'extrémité multifonctionnel (4).

7. Procédé selon l'une des revendications précédentes, dans lequel la pièce (1) est une plaque de montage pour la construction d'installations de commutation, qui est transportée sur un support de pièce mobile (6) ou un autre système de convoyage, par exemple une piste à rouleaux ou un convoyeur à chaînes, entre différentes stations de traitement, dans lequel, pour la mise à disposition de la pluralité de composants électroniques (5) sur la plaque de montage, la plaque de montage est d'abord fixée sur le support de pièce puis à nouveau détaché du support de pièce lorsque la plaque de montage a été traitée mécaniquement, lorsque les composants électroniques (5) ont été fixés sur la plaque de montage et lorsque tous les câblages ont été réalisés selon le schéma de branchement, la plaque de montage ayant été pour cela transportée par le support de pièce mobile entre au moins une première station de traitement pour le traitement mécanique, une deuxième station de traitement pour le montage des composants électriques (5) sur la plaque de montage et une troisième station de traitement pour le câblage électrique des composants électriques (5).

8. Procédé selon la revendication 7, dans lequel la plaque de montage est mise à disposition de manière montée dans une orientation verticale à l'intérieur d'une armoire de commande et est reçue par le support de pièce mobile (6) et monté sur celui-ci dans cette position, dans lequel la plaque de montage est ensuite retirée avec le support de pièce de l'intérieur de l'armoire de commande et guidée vers les stations de traitement, la plaque de montage étant pour cela pivotée, pour le traitement, au niveau d'au moins une des stations de traitement, de l'orientation verticale vers une orientation horizontale ou une orientation inclinée par rapport à la verticale, dans lequel la plaque de montage est mise, après un montage final et, le cas échéant, une vérification technique, à nouveau dans l'orientation verticale et insérée, dans cette orientation, avec le support de pièce, à l'intérieur de l'armoire de commande et y est reliée avec le châssis de l'armoire de commande.

9. Procédé selon la revendication 8, dans lequel la plaque de montage avec le support de pièce mobile dans l'orientation verticale est déplacée hors de l'armoire de commande au-dessus d'une paroi latérale ouverte de l'armoire de commande parallèlement au côté de la porte et au côté arrière de l'armoire de commande.

10. Procédé selon l'une des revendications précédentes, dans lequel, une fois l'extrémité du câble mise en contact et fixé avec le raccord électrique d'un des composants électroniques (5), un contrôle de fonctionnement et de qualité est effectué avec l'effecteur d'extrémité multifonctionnel (4), grâce au fait que l'effecteur d'extrémité multifonctionnel (4) détermine une résistance de transition électrique entre le câble mis en contact et le raccord électrique, ou bien l'extrémité du câble est sollicitée avec une force déterminée à l'encontre d'une direction d'insertion de l'extrémité du câble dans une borne à ressort ou une borne à vis du raccord.

11. Dispositif pour l'exécution d'un procédé selon l'une des revendications précédentes, dans lequel le dispositif comprend au moins un robot (2), plus particulièrement un robot à bras articulé, avec un effecteur d'extrémité multifonctionnel (4), dans lequel l'au moins un robot (2) comprend un système de transport par l'intermédiaire duquel une séquence de câbles (3), constituée de plusieurs câbles reliés entre eux, peut être introduite dans l'effecteur d'extrémité multifonctionnel (4), dans lequel l'effecteur d'extrémité multifonctionnel (4) comprend un préhenseur pour la préhension d'une extrémité de câble de la séquence de câbles (3), dans lequel l'effecteur d'extrémité multifonctionnel (4) du robot (2) comprend, pour le détachement d'un câble terminal de la séquence de câbles (3) hors de la séquence de câbles, un dispositif de séparation,
**caractérisé en ce que**
le robot comprend un manchon de détection avec un capteur à travers laquelle la séquence de câbles (3) peut être guidée, dans lequel le capteur est conçu pour détecter une zone de raccordement entre des câbles successifs de la séquence de câbles.

12. Dispositif selon la revendication 11, qui comprend un premier et un deuxième robots (2) avec chacun un effecteur d'extrémité multifonctionnel (4), dans lequel les effecteurs d'extrémité multifonctionnels (4) des deux robots (2) présentent différentes fonctionnalités ou les mêmes fonctionnalités, dans lequel le premier robot (2) est conçu pour introduire une première des deux extrémités de câbles d'un câble de la séquence de câbles dans un raccord électrique d'un premier des composants électroniques (5), et dans lequel le deuxième robot (2) est conçu pour introduire une deuxième des deux extrémités de câbles d'un câble de la séquence de câbles dans un raccord électrique d'un deuxième des composants électroniques (5).

13. Dispositif selon la revendication 12 ou 13, qui comprend un premier et un deuxième robots (2) avec chacun un effecteur d'extrémité multifonctionnel (4), dans lequel un premier des robots (2) peut maintenir une première extrémité d'un câble flexible et un deuxième des robots (2) peut maintenir une deuxième extrémité du câble flexible et dans lequel les robots (2) sont conçus pour maintenir le câble flexible en tension mécanique de sorte que le câble est globalement droit entre les extrémités.

14. Dispositif selon l'une des revendications 11 à 13, qui comprend en outre un support de pièce qui est conçu pour maintenir une pièce, plus particulièrement une plaque de montage, pour introduire la pièce dans au moins une station de traitement, plus particulièrement dans l'au moins un robot (2) et pour l'orienter par rapport à la station de traitement.

15. Dispositif selon l'une des revendications 11 à 14, dans lequel l'effecteur d'extrémité multifonctionnel (4) comprend un capteur qui est conçu pour détecter une position d'un composant électrique (5) à câbler sur la pièce et/ou une position et/ou une orientation d'un raccord du composant électrique.

16. Dispositif selon la revendication 15, qui comprend une installation de traitement de données, dans laquelle est enregistré un schéma de branchement d'une installation de commutation électrique à réaliser sur la pièce, dans lequel l'installation de traitement de données est conçue pour compléter l'information de câblage, enregistrée dans le schéma de branchement, des composants (5) disposés sur la pièce, avec une information de position et/ou une information d'orientation détectée avec le capteur, ou, lorsque le schéma de branchement comprend déjà une information initiale concernant la position et/ou l'orientation, pour actualiser cette information initiale en fonction de l'information de position et/ou de l'information d'orientation détectée.

17. Dispositif selon la revendication 15 ou 16, dans lequel, pour le contrôle de l'au moins un robot à bras articulé (2), des données ECAD, qui contiennent une planification de l'installation de commutation à réaliser, sont utilisées en tant que première entrée, dans lequel, pour le contrôle de l'au moins un robot à bras articulé (2) l'information de position et/ou l'information d'orientation détectée avec le capteur est utilisée en tant que deuxième entrée et dans lequel une installation de traitement de données du dispositif est conçue pour réaliser le contrôler de l'au moins un robot à bras articulé (2) à partir des première et deuxième entrées.
